Europäisches Patentamt

European Patent Office

Office européen des brevets

(11) Publication number: **0 084 888 B2**

(12) **NEW EUROPEAN PATENT SPECIFICATION**

(45) Date of publication of the new patent specification: **25.10.95**

(51) Int. Cl.⁶: **C08G 61/08**

(21) Application number: **83100645.7**

(22) Date of filing: **25.01.83**

The file contains technical information submitted after the application was filed and not included in this specification

(54) **A dicyclopentadiene thermoset polymer and a catalyst and a method for making it.**

(30) Priority: **25.01.82 US 342453**
**25.01.82 US 342455**

(43) Date of publication of application:
**03.08.83 Bulletin 83/31**

(45) Publication of the grant of the patent:
**16.06.87 Bulletin 87/25**

(45) Mention of the opposition decision:
**25.10.95 Bulletin 95/43**

(84) Designated Contracting States:
**BE DE FR GB IT NL SE**

(56) References cited:
**EP-A- 0 084 375**
**JP-A-53 111 399**
**US-A- 3 492 245**
**US-A- 3 627 739**
**US-A- 3 652 487**

**DIE MAKROMOLEKULARE CHEMIE, vol. 130, no. 3179, 1969, pages 153-165, Hüthig & Wepf Verlag, Basel (CH); G. DALL'ASTA et al.: "Homopolymerization of dicyclopentadiene induced by ZIEGLER-NATTA catalysts and by other transition metal systems".**

**Bulletin of the Chemical Society of Japan,**

**Vol. 41, 1968, "Ring-Opening Polymerization of Norbornene and Its Derivatives by MoCl5, WCl6 and ReCl5 Catalysts", pp. 211-217**

(73) Proprietor: **HERCULES INCORPORATED**
**Hercules Plaza**
**Wilmington**
**Delaware 19899 (US)**

(72) Inventor: **Klosiewicz, Daniel William**
**213 Sheldon Drive**
**Deacon's Walk**
**Newark, Del. 19711 (US)**
Inventor: **Tom, Glenn McPherson**
**1201 McKennans Church Road**
**Sherwood Park II**
**Wilmington, Del. 19808 (US)**

(74) Representative: **Lederer, Franz, Dr. et al**
**Lederer, Keller & Riederer**
**Patentanwälte**
**Prinzregentenstrasse 16**
**D-80538 München (DE)**

EP 0 084 888 B2

**Description**

This invention relates to a novel polymer of dicyclopentadiene (hereinafter referred to as DCPD) and a method for making the same. In particular, it relates to a high modulus, high impact strength thermoset poly(DCPD) homopolymer which is formed via a metathesis-catalyst system. In a preferred embodiment the homopolymer is formed when two solutions, one a catalyst/monomer mixture and the other an activator/monomer mixture, are combined in a reaction injection molding (hereinafter referred to as RIM) machine and then injected into a mold.

Any good thermoset polymer should meet at least two criteria. It should have desirable physical properties and it should lend itself to easy synthesis and forming. Among the most desirable physical properties for many polymers is a combination of high impact strength and high modulus. A standard test for impact strength is the notched Izod impact test, ASTM No. D-256. For an unreinforced thermoset polymer to have good impact strength, its notched Izod impact should be at least 0.08 J/mm (1.5 ft. lb/in.) notch. It is desirable that this good impact strength be combined with a modulus of at least about $1,035 \times 10^6$ V.Pa (150,000 psi) at ambient temperature. Thermoset polymers with high impact strength and high modulus find useful applications as engineering plastics in such articles of manufacture as automobiles, appliances and sports equipment. Among the critical factors in the synthesis and forming of a thermoset polymer are the conditions required to make the polymer set up or gel. Many thermoset polymers require considerable time, elevated temperature and pressure, or additional steps after the reactants are mixed before the setting is complete.

While some references to poly(DCPD) have been made in the literature, a thermoset homopolymer having high impact strength and high modulus has never been described. Characteristics of thermoset polymers include insolubility in common solvents such as gasoline, naphtha, chlorinated hydrocarbons, and aromatics as well as resistance to flow at elevated temperatures. Work has been done on the metathesis copolymerisation of DCPD with one or more other monomers to produce soluble copolymers. This copolymer formation has resulted in the production of unwanted insoluble by-products. U.S. Patent 4,002,815, for instance, teaches the copolymerization of cyclopentene with DCPD, describes an insoluble by-product and suggests that the by-product could be a gel of a DCPD homopolymer.

Some work, usually in an attempt to produce soluble poly(DCPD's), has been done on the metathesis homopolymerization of DCPD. Japanese unexamined published patent applications Kokai 53-92000 and 53-111399 disclose soluble poly(DCPD's). Several syntheses of soluble poly(DCPD) have produced insoluble by-products. Takata *et al*, J. Chem. Soc. Japan Ind. Chem. Sect., *69*, 711 (1966), discloses the production of an insoluble poly(DCPD) by-product from the Ziegler-Natta catalyzed polymerization of DCPD; Oshika *et al*, Bulletin of the Chemical Society of Japan, discloses the production of an insoluble polymer when DCPD is polymerized with $WCl_6$, $AlEt_3/TiCl_4$ or $AlEt_3 MoCl_5$; and Dall Asta *et al*, Die Makromolecular Chemie *130*, 153 (1969), discloses an insoluble by-product produced when a $WCl_6/AlEt_2 Cl$ catalyst system is used to form poly(DCPD).

In U.S. Patent 3,627,739 ('739), a thermoset poly(DCPD) is the object of synthesis. The poly(DCPD) of '739 is brittle, having an Izod impact strength of only 0.78.

Not only is it desirable that the thermoset polymer have high impact strength, but it is also desirable that it be easily synthesized and formed. A RIM process achieves this second goal by in-mold polymerization. The process involves the mixing of two or more low viscosity reactive streams. The combined streams are then injected into a mold where they quickly set up into a solid infusible mass. RIM is especially suited for molding large intricate objects rapidly and in low cost equipment. Because the process requires only low pressures, the molds are inexpensive and easily changed. Furthermore, since the initial materials have low viscosity, massive extruders and molds are not necessary and energy requirements are minimal compared to the injection molding or compression molding commonly used. For a RIM system to be of use with a particular polymer, certain requirements must be met: 1) the individual streams must be stable and must have a reasonable shelf-life under ambient conditions; 2) it must be possible to mix the streams thoroughly without their setting up in the mixing head; 3) when injected into the mold, the materials must set up to a solid system rapidly; and 4) any additives-fillers, stabilizers, pigments, etc.-must be added before the material sets up. Therefore, the additives selected must not interfere with the polymerization reaction.

It can be seen that when developing a RIM process a tradeoff must be made. It is desirable that the polymer set up quickly, but the polymerization cannot be too quick. The components cannot be so reactive that they set up in the mixing head before they can be injected into the mold. Once in the mold, however, the polymer should set up as quickly as possible. It is not desirable that the polymer take a long time or require additional steps to gel completely.

EP 0 084 888 B2

It is known in the prior art to base a RIM system on the combination of two reactive monomers, e.g., the polyol and the diisocyanate monomers employed in a polyurethane system. It is known, but not in the context of a RIM system, to combine two or more reactive parts of a catalyst, where one or both are in solution with the monomer, to form a homopolymer. A process which employs two separate streams based on a two part catalyst system to produce a thermoset polymer in such a manner that the streams can be combined in one place and then rapidly set up in another is unique and is a substantial contribution to the art.

U.S. Patent 2,846,426, Larson, claims the combination of two vapor streams, one containing a vaporizable alkylaluminum compound and the other containing a vaporizable compound of Group IV-B, V-B, or VI-B metal, where at least one of the streams contains a gaseous monomer. The vapor streams are combined and a thermoplastic polymer is formed in the same reaction zone. U.S. Patent 3,492,245, Calderon et al, discloses the in-situ formation of a catalyst system containing an organoaluminum compound, a tungsten hexahalide and a hydroxy compound. Again, the reactive components are mixed and the polymerization of an unsaturated alicyclic compound occurs in the same vessel. U.S. Patent 3,931,357, Meyer, teaches a process for forming a soluble graft copolymer of a polydiene or a polyalkenamer and an unsaturated polyolefin rubber which entails combining a stream containing a metathesis catalyst component from a metal of subgroups V through VII of the periodic table with a stream containing an alkyl or a hydride of a metal from main groups I through VII of the periodic table prior to the metathesis reaction proper. Since the copolymer is soluble, there is no requirement that it rapidly set up.

This invention encompasses a high impact strength, high modulus thermoset homopolymer comprising polymerized units of DCPD and a method for its production using a two part metathesis system. The DCPD polymer is a tough, rigid material with high modulus and excellent impact strength. The flexural modulus is in the range of about $1,035 \times 10^6$ KPa (150,000) to about $2,07 \times 10^6$ KPa (300,000 psi) and the notched Izod impact strength is at least 0,08 J/mm (1.5 ft. lb/in.) notch.

One important property of the thermoset homopolymer, which gives rise to these desirable characteristics, is the extent to which the homopolymer is crosslinked. An indication of the extent of crosslinking is provided by the polymer's solvent swell value after immersion in toluene for two hours at 100°C. Percent solvent swell is defined as final polymer weight minus initial polymer weight, divided by initial polymer weight times one hundred. It has been found that the polymers have a solvent swell value less than two hundred percent.

The polymer can be synthesized by reacting DCPD with a two part metathesis-catalyst system. The first part of the catalyst system is comprised of a metathesis catalyst, preferably $WOCl_4$, $WCl_6$ or a combination of $WCl_6$ plus an alcohol or phenol. The second part of the catalyst system is comprised of an activator such as $SnBu_4$, $AlEt_3$, $AlEt_2Cl$, $AlEtCl_2$, or similar compounds. In a preferred synthesis, the activator is $Et_2AlCl$. Also in the synthesis the activator containing solution includes an ester, ether, ketone or nitrile which serves to moderate the rate of polymerization. Examples of suitable moderators are ethyl benzoate and di-n-butyl ether. In a preferred embodiment the two metathesis-catalyst system components, plus the monomer, form the basis for at least two separate streams which can be mixed in the head of a RIM machine and then injected into a mold where they will quickly set up into a tough, infusible mass. Various additives such as fillers and stabilizers can be added to modify the properties of the thermoset polymer.

Dicyclopentadiene can be polymerized in such a manner that the resulting product is a thermoset homopolymer having high impact strength and high modulus. The preferred monomer is commercially available *endo*-DCPD (3a,4,7,7a-tetrahydro-4,7-methano-1H-indene). The *exo*-isomer, while not commercially available, can be used just as well. The preferred commercially available material normally has a purity of 96-97%. Commercially available material should be purified in order to prevent impurities from inhibiting the polymerization. The low boiling fraction should be removed. This can be done by stripping away several percent of the unsaturated four to six carbon atom volatiles, i.e. the volatiles distilled below 100°C at about $90 + 3$ torr ($1.2 \times 10^4 + 400$ Pa). It is often desirable to purify the starting material even further by treatment with silica gel. Additionally, the water content of the starting material should be below about 100 ppm. The presence of water interferes with polymerization by hydrolysis of both the catalyst and the activator components of the catalyst system. For example, water can be removed by azeotropic distillation under reduced pressure. Even after these steps the monomer still contains some impurities. It should be understood, therefore, that throughout this description the term homopolymer refers to the polymer resulting from essentially pure starting material.

The homopolymerization of the purified DCPD is catalyzed by a two part metathesis-catalyst system. One part contains a tungsten containing catalyst, such as a tungsten halide or tungsten oxyhalide, preferably $WCl_6$ or $WOCl_4$. The other part contains an activator such as $SnBu_4$ or an alkylaluminum

3

compound. The alkylaluminum compound can be an alkylaluminum dihalide or dialkylaluminum halide where the alkyl group contains one to ten carbon atoms. In the preferred activator the alkyl group is ethyl with diethyl aluminum chloride being most preferred.

One part of the catalyst system comprises the tungsten containing catalyst, as described above, preferably in solution with DCPD monomer. The tungsten compound if unmodified, will rapidly polymerize the monomer. Consequently, the tungsten compound should first be suspended in a small amount of a suitable solvent. The solvent must not be susceptible to reacting with tungsten compound. For instance, where a tungsten halide is employed the solvent must not be susceptible to halogenation. Examples of preferred solvents are benzene, toluene, chlorobenzene, dichlorobenzene, and trichlorobenzene. Sufficient solvent should be added so that the tungsten compound concentration is between about 0.1 and 0.7 mole per liter of solvent.

The tungsten compound can be solubilized by the addition of a small amount of an alcoholic or a phenolic compound. Phenolic compounds are preferred. Suitable phenolic compounds include phenol, alkyl-phenols, and halogenated phenols, with tert-butyl phenol, tert-octyl phenol and nonyl phenol being most preferred. The preferred molar ratio of tungsten compound/phenolic compound is from about 1:1 to about 1:3. The tungsten compound/phenolic compound solution can be made by adding the phenolic compound to a tungsten compound/organic solvent slurry, stirring the solution and then blowing a stream of a dry inert gas through the solution to remove the hydrogen chloride which is formed. Alternatively, a phenolic salt, such as a lithium or sodium phenoxide, can be added to a tungsten compound/organic solvent slurry, the mixture stirred until essentially all the tungsten compound is dissolved, and the precipitated inorganic salt removed by filtration or centrifugation. All of these steps should be carried out in the absence of moisture and air to prevent deactivation of the catalyst.

To prevent premature polymerization of the tungsten compound/monomer solution, which would occur within a matter of hours, from about 1 to about 5 moles of a Lewis base or a cheating agent can be added per mole of tungsten compound. Preferred chelants include acetylacetones, alkyl acetoacetates, where the alkyl group contains from one to ten carbon atoms; preferred Lewis bases are nitriles and ethers such as benzonitrile and tetrahydrofuran. The improvement in the stability and shelf-life of the tungsten compound/monomer solution is obtained whether the complexing agent is added before or after the phenolic compound. When purified DCPD is added to this catalyst solution it forms a solution which is stable and has a shelf-life of several months.

The other part of the metathesis-catalyst system comprises the activator, as described above, preferably in DCPD monomer. This mixture is storage stable and therefore, unlike the tungsten compound/monomer solution, needs no additives to prolong its shelf-life. If however, an unmodified activator monomer solution is mixed with the catalyst/monomer solution, the polymerization would initiate instantaneously and the polymer could set up in the mixing head. The onset of polymerization is delayed by adding a moderator to the activator/monomer solution. Ethers, esters, ketones and nitriles can act as moderators for the alkylaluminum compounds. Ethyl benzoate and butyl ether are preferred. The preferred ratio of the alkylaluminum to moderator is from about 1:1.5 to about 1:5 on a molar basis.

The polymerization time required for gelation is also temperature dependent. As the temperature at which the reaction is carried out is increased the reaction rate will also increase. For every eight degree increase in temperature the reaction rate will approximately double. Consequently, to keep the reaction rate controlled at higher reaction temperatures a less active formulation of the metathesis-catalyst system should be used. One way of reformulating the system is by choice of moderator. Other ways will be readily determinable by one skilled in the art.

What is ultimately required is that when the catalyst system's components are combined, the resulting DCPD to tungsten compound ratio will be from about 1,000:1 to about 15,000:1 on a molar basis, preferably 2,000:1 and the DCPD to alkylaluminum ratio will be from about 100:1 to about 2000:1 on a molar basis, preferably about 200:1 to about 500:1. To illustrate a preferred combination: sufficient DCPD is added to a 0.1 M tungsten containing catalyst solution prepared as described above, so that the final tungsten compound concentration is 0.007 molar. This corresponds to a DCPD to tungsten compound ratio of 1000:1. Sufficient DCPD is added to the $Et_2AlCl$ solution, prepared as described above, so that the alkylaluminum concentration is 0.048 M. This corresponds to a DCPD to alkylaluminum ratio of 150:1. If these two streams are mixed in a 1:1 ratio, the final ratio of DCPD to tungsten compound will be 2000:1, the final ratio of DCPD to alkylaluminum will be 300:1 and the final ratio of tungsten compound to alkylaluminum will be about 1:7. The illustrated combination is not the lowest catalyst level at which moldings can be made, but it is a practical level that provides for excess catalyst if impurities in the system consume some of the catalyst components. A higher alkylaluminum level will not only increase costs and residual chlorine levels but may result in a less satisfactory cure. Too low a tungsten compound concentration

4

results in incomplete conversion. A wide range of alkylaluminum activator to tungsten catalyst formulations produce samples which have good out-of-mold properties such as tear resistance, stiffness, residual odor, and surface properties.

In a preferred synthesis, the poly(DCPD) is made and molded with the RIM process. The two parts of the metathesis-catalyst system are each mixed with DCPD, to form stable solutions which are placed in separate vessels. These containers provide the source for separate streams. The two streams are combined in the RIM machine's mixing head and then injected into a warm mold where they quickly polymerize into a solid, infusible mass. The invention is not intended to be limited to systems employing two streams each containing monomer. It will be obvious to one skilled in the art that there may be situations where it is desirable to have monomer incorporated in just one stream or to employ more than two streams where the additional streams contain monomer and/or additives.

These streams are completely compatible with conventional RIM equipment. Metathesis-catalyzed polymerizations are known to be inhibited by oxygen so it is necessary to store the components under an inert gas but, surprisingly, it is not necessary to blanket the mold with an inert gas. The streams are combined in the mixing head of a RIM machine. Turbulent mixing is easy to achieve because the process involves low molecular weight, rapidly diffusing components. Typically the mixing heads have orifices about 0,813 mm (0.032 inch) in diameter and a jet velocity of about 122 m/sec (400 ft/sec). After being combined the mixture is injected into a mold maintained at 35-100°C, preferably 50-70°C. The mold pressure is in the range of about 69-345 KPa (10-50 psi). A rapid exothermic reaction occurs as the poly(DCPD) sets up. The mold can be opened in as little as 20-30 seconds after the combined streams have been injected. In this short time heat removal is not complete and the polymer is hot and flexible. The polymer can be removed from the mold immediately while hot or after cooling. After the polymer has cooled it will become a rigid solid. The total cycle time may be as low as 0.5 minute. Post-curing is desirable but not essential, to bring the samples to their final stable dimensional states, to minimize residual odors, and to improve final physical properties. Post-curing at about 175°C for about 15 minutes is usually sufficient.

The product has a flexural modulus of about $1,035 \times 10^6$ to $2,07 \times 10^6$ KPa (150,000 to 300,000 psi) and a notched Izod impact resistance of at least about 0,08 J/mm (1.5 ft lb/in) notch. The homopolymer is insoluble in common solvents such as gasoline, naphthas, chlorinated hydrocarbons and aromatics, resistant to flow at temperatures as high as 350°C and readily releases from the mold.

Various additives can be included to modify the properties of poly(DCPD). Possible additives include fillers, pigments, antioxidants, light stabilizers and polymeric modifiers. Because of the rapid polymerization time the additives must be incorporated before the DCPD sets up in the mold. It is often desirable that the additives be combined with one or both of the catalyst system's streams before being injected into the mold. Fillers can also be charged to the mold cavity, prior to charging the reaction streams, if the fillers are such that the reaction stream can readily flow around them to fill and the remaining void space in the mold. It is essential that the additives do not affect catalytic activity. One class of possible additives is reinforcing agents or fillers. These are compounds which can increase the polymer's flexural modulus with only a small sacrifice in impact resistance. Possible fillers include glass, wollastonite, mica, carbon black, talc, and calcium carbonate. It is surprising that in spite of the highly polar nature of their surfaces these fillers can be added without appreciably affecting the polymerization rate. From about 5% to 75% by weight may be incorporated. This and all subsequent percentages are based on the weight of the final product. The addition of fillers which have modified surface properties are particularly advantageous. The exact amount of a particular filler to be used in a particular situation will be easily determinable and will depend on the preferences of the practitioner. The addition of fillers also serves to decrease the mold shrinkage of the product. After a short post curer at 150°-200°C an unfilled product will shrink from about 3.0 to about 3.5% whereas adding 20-25 wt% filler will decrease the shrinkage to 1.5-2% and adding 33 wt% filler will further decrease shrinkage to about 1%.

Since poly(DCPD) contains some unsaturation it may be subject to oxidation. The product can be protected by the incorporation of as much as about 2.0 wt% of a phenolic or amine antioxidant. Preferred antioxidants include 2,6-tert-butyl-p-cresol, N,N'-diphenyl-p-phenylene diamine and tetrakis [methylene(3,5-di-t-butyl-4-hydroxy cinnamate)] methane. While the antioxidant can be added to either or both streams, incorporation into the activator/monomer stream is preferred.

The addition of an elastomer can increase the polymer's impact strength 5-10 fold with only a slight decrease in flexural modulus. The elastomer can be dissolved in either or both of the DCPD streams in the 5-10 wt% range based on dicyclopentadiene polymer without causing an excessive increase in the solution viscosity. Useful elastomers include natural rubber, butyl rubber, polyisoprene, polybutadiene, polyisobutylene, ethylene-propylene copolymer, styrene-butadiene-styrene triblock rubber, styrene-isoprene-styrene triblock rubber and ethylene-propylene diene terpolymers. The amount of elastomer used is determined by its molecular weight and is limited by the viscosity of the streams. The streams cannot be so viscous that adequate mixing is not possible. The Brookfield viscosity of DCPD is about 6 cps (6 mPas) at 35°C. Increasing the viscosity to between about 300 cps (300 mPas) and about 1000 cps (1000 mPas) alters the mold filling characteristics of the combined streams. An increase in viscosity reduces leakage from the mold and simplifies the use of fillers by decreasing the settling rates of the solids. An example of a preferred elastomer is styrene-butadiene-styrene triblock. Where 10 wt% of this additive is incorporated into the streams not only is the viscosity increased to about 300 cps but the impact strength of the final product also increases. Although the elastomer can be dissolved in either one or both of the streams it is desirable that it be dissolved in both. When the two streams have similar viscosities more uniform mixing is obtained.

Examples 1 and 2

In Example 1 a 0.1 M solution of a tungsten containing catalyst solution was prepared by adding 20 grams of $WCl_6$ in 460 ml of dry toluene under a $N_2$ atmosphere and then adding a solution of 8.2 grams of p-tert-butyl phenol in 30 ml of toluene. The catalyst solution was sparged overnight with nitrogen to remove the HCl generated by the reaction of $WCl_6$ with the p-tert-butylphenol. In this end in all the following examples phenol is used as a shorthand for p-tert-butylphenol and for simplicity the solution is referred to as $WCl_6$/phenol. Then a 0.033 M catalyst/monomer solution was prepared by mixing under nitrogen 10 ml of DCPD, 0.07 ml of benzonitrile and 5 ml of the 0.1 M catalyst solution. An activator/monomer solution was prepared by combining, under nitrogen, 8.6 ml of DCPD, 0.1 ml of isopropyl ether and 0.36 ml of 1.0 M $Et_2AlCl$ in DCPD.

Polymerization was accomplished by adding 1.1 ml of the 0.033 M catalyst/monomer solution to 8.9 ml of the activator/monomer solution. Both solutions were initially at 25°C. They were vigorously mixed. After a brief induction period a sharp exotherm was observed. A solid, insoluble polymer was formed. The time that elapsed until rapid polymerization began and the total exotherm of the sample above the starting temperature are shown in Table I.

In Example 2 the above procedure was repeated except that 0.36 ml of 1.0 M $EtAlCl_2$ was used in place of $Et_2AlCl$ to prepare the activator solution and the reaction was started at 40°C. A solid, insoluble polymer was formed. The results are shown in Table I.

TABLE I

|  | Example 1 | Example 2 |
|---|---|---|
| DCPD | 72 mmol | 72 mmol |
| $WCl_6$/Phenol | 0.036 mmol | 0.036 mmol |
| $Et_2AlCl$ | 0.36 mmol | - |
| $EtAlCl_2$ | - | 0.36 mmol |
| Benzonitrile | 0.04 mmol | 0.04 mmol |
| Isopropyl ether | 0.72 mmol | 0.72 mmol |
| Initial temperature | 25°C | 40°C |
| Time until exotherm | 15 sec. | 445 sec. |
| Exotherm | 122°C | 147°C |

Examples 3-8

In Examples 3 through 8 the procedure described in Example 1 was repeated except that different moderators were added to the activator/monomer solution. In each example the ratio of moles moderator to moles of $Et_2AlCl$ was held constant at 2:1. In Example 3, di-n-butyl ether was added while in Example 4, diisopropyl ether was used. In Example 5, ethyl benzoate was used while in Example 6, phenylethyl acetate was added. In Example 7, diisopropyl ketone was added. Lastly, in Example 8, tetrahydrofuran was added. In each example the initial temperature was 25°C (+1°C). Example 8 was the only case where a solid insoluble polymer was not obtained. The results are listed in Table II.

6

TABLE II

|  | Example 3 | Example 4 | Example 5 | Example 6 | Example 7 | Example 8 |
|---|---|---|---|---|---|---|
| DCPD | 72 mmol | 72 mmol | 72 mmol | 72 mmol | 72 mmol | 72 mmol |
| $WCl_6$/phenol | 0.036 mmol | 0.036 mmol | 0.036 mmol | 0.036 mmol | 0.036 mmol | 0.036 mmol |
| $Et_2AlCl$ | 0.36 mmol | 0.36 mmol | 0.36 mmol | 0.36 mmol | 0.36 mmol | 0.36 mmol |
| Di-n-butyl ether | 0.72 mmol | - | - | - | - | - |
| Diisopropyl ether | - | 0.72 mmol | - | - | - | - |
| Ethyl benzoate | - | - | 0.72 mmol | - | - | - |
| Phenyl ethyl acetate | - | - | - | 0.72 mmol | - | - |
| Diisopropyl ketone | - | - | - | - | 0.72 mmol | - |
| Tetrahydrofuran | - | - | - | - | - | 0.72 mmol |
| Benzonitrile | 0.04 mmol | 0.04 mmol | 0.04 mmol | 0.04 mmol | 0.04 mmol | 0.04 mmol |
| Time until exotherm | 42 sec. | 15 sec. | 60 sec. | 282 sec. | 160 sec. | no rxn. |
| Exotherm | 153°C | 122°C | 155°C | 157°C | 147°C | - |

Examples 9-12

In Examples 9 through 12 the activator to catalyst ratios were varied. In Example 9, 0.88 ml of catalyst/monomer solution, described in Example 1 was added to 7.1 ml of DCPD containing sufficient $Et_2AlCl$ and di-n-butyl ether to give the composition listed in Table III. In Example 10, 0.44 ml of the same catalyst/monomer solution as used in Example 9 was added to 7.5 ml of the same activator/monomer solution used in Example 9, to give the final composition listed in Table III. In Example 11, 4.0 ml of a catalyst/monomer solution prepared by mixing 20 ml of DCPD with 1.5 ml of a 0.1 M $WCl_6$/phenol solution, was mixed with 4.0 ml of an activator/monomer solution. In this activator solution there was sufficient $Et_2AlCl$ to give a DCPD to alkylaluminum ratio of 100:1 and sufficient di-n-butyl ether to give a di-n-butyl ether to aluminum ratio of 2:1. In Example 12, 4.0 ml of the catalyst/monomer solution used in Example 11 was mixed with 2.0 ml of DCPD and 2.0 ml of the activator/monomer solution used in Example 11. In each case a solid, insoluble polymer was formed. The results of these reactions showing a variation in the exotherms due to variations in the Al/W ratio, are listed in Table III.

TABLE III

|  | Example 9 | Example 10 | Example 11 | Example 12 |
|---|---|---|---|---|
| DCPD | 57.6 mmol | 57.6 mmol | 57.6 mmol | 57.6 mmol |
| $WCl_6$/Phenol | 0.029 mmol | 0.0145 mmol | 0.029 mmol | 0.029 mmol |
| $Et_2AlCl$ | 0.29 mmol | 0.29 mmol | 0.29 mmol | 0.145 mmol |
| Di-n-butyl ether | 0.58 mmol | 0.58 mmol | 0.58 mmol | 0.29 mmol |
| Benzonitrile | 0.033 mmol | 0.016 mmol | 0.033 mmol | 0.033 mmol |
| DCPD/Al | 200 | 200 | 200 | 400 |
| DCPD/W | 2000 | 4000 | 2000 | 2000 |
| Al/W | 10/1 | 20/1 | 10/1 | 5/1 |
| Time to exotherm | 50 sec. | 48 sec. | 33 sec. | 43 sec. |
| Exotherm | 153°C | 120°C | 145°C | 168°C |

Examples 13-15

In Examples 14-15 a small amount of a polar material was added to the catalyst/monomer solution in order to illustrate the effect of polar material on shelf-life. In Example 13, a catalyst/monomer solution was prepared by adding 2.0 ml of a 0.1 M tungsten containing catalyst solution, as described in Example 1, to 20 ml of DCPD in a nitrogen purged tube. This mixture gelled to a non-flowing material within 24 hours. In Example 14, the same procedure was carried out except that 0.03 ml of benzonitrile was added, giving a final benzonitrile to tungsten halide ratio of 1.5:1. This mixture did not gel and was catalytically active after 4 weeks. Example 15 illustrates the result when tetrahydrofuran was added to give a tetrahydrofuran to tungsten halide ratio of 1.5:1. Again, a greatly improved storage stability was observed. The results are listed in Table IV.

TABLE IV

|  | Example 13 | Example 14 | Example 15 |
|---|---|---|---|
| DCPD | 130 mmol | 130 mmol | 130 mmol |
| $WCl_6$/phenol | 0.2 mmol | 0.2 mmol | 0.2 mmol |
| Benzonitrile | - | 0.3 mmol | - |
| Tetrahydrofuran | - | - | 0.3 mmol |
| Condition after 24 hours | gelled | low viscosity | low viscosity |
| Condition after 4 weeks | gelled | low viscosity | low viscosity |
| Activity after 4 weeks | gelled | acceptable | acceptable |

Examples 16-18

In Examples 16-18, the concentration of di-n-butyl ether incorporated into the activator/monomer solution to serve as a moderator was varied. In Example 16, the procedure used in Example 1, was followed with the exception that 0.078 ml of n-butyl ether was substituted for the diisopropyl ether. This gave a final ratio of di-n-butyl ether to alkylaluminum of 1.5:1. In Example 17, the procedure was repeated except that 0.156 ml of di-n-butyl ether was added, giving a final ether/Al ratio of 3:1. In Example 18, sufficient di-n-butyl ether was added to bring the final ether to alkylaluminum ratio to 5:1. All the reactions in Table V were initiated at 25°C. In each case a solid, insoluble polymer was formed. The results of the reactions are listed in Table V.

TABLE V

|  | Example 16 | Example 17 | Example 18 |
|---|---|---|---|
| DCPD | 57.6 mmol | 57.6 mmol | 57.6 mmol |
| $WCl_6$/phenol | 0.029 mmol | 0.029 mmol | 0.029 mmol |
| $Et_2AlCl$ | 0.29 mmol | 0.29 mmol | 0.29 mmol |
| Di-n-butyl ether | 0.43 mmol | 0.86 mmol | 1.45 mmol |
| Benzonitrile | 0.033 mmol | 0.033 mmol | 0.033 mmol |
| Ether/Al | 1.5 | 3.0 | 5.0 |
| Elapsed time until exotherm | 36 sec. | 55 sec. | 75 sec. |
| Exotherm | 150°C | 158°C | 159°C |

Examples 19-21

In Examples 19-21, the level of $Et_2AlCl$ used in the polymerization of DCPD was varied. In Example 19, 18.5 ml of DCPD was mixed under $N_2$ with 1.5 ml of a 1.0 M solution of $Et_2AlCl$ in DCPD and with 0.55 ml of di-n-butyl ether. Then in a $N_2$ purged tube 8.9 ml of this activator/monomer solution was mixed with 1.1 ml of a catalyst/monomer solution as described in Example 1. In Example 20, 4.5 ml of the activator/monomer solution used in Example 19 was combined with 4.4 ml of DCPD and 1.1 ml of the catalyst/monomer solution used in Example 20. In Example 21, 2.5 ml of the activator/monomer solution used in Example 19 was combined under $N_2$ with 6.4 ml of DCPD and 1.1 ml of the catalyst/monomer solution used in Example 19. The final compositions of these reaction mixtures are listed in Table VI. All reactions were initiated at 25°C.

8

TABLE VI

|  | Example 19 | Example 20 | Example 21 |
|---|---|---|---|
| DCPD | 72 mmol | 72 mmol | 72 mmol |
| WCl$_6$/phenol | 0.036 mmol | 0.036 mmol | 0.036 mmol |
| Et$_2$AlCl | 0.72 mmol | 0.36 mmol | 0.20 mmol |
| Di-n-butyl ether | 1.44 mmol | 0.72 mmol | 0.40 mmol |
| Benzonitrile | 0.04 mmol | 0.04 mmol | 0.04 mmol |
| DCPD/Al | 100 | 200 | 360 |
| Di-n-butyl ether/Al | 2/1 | 2/1 | 2/1 |
| Elapsed time until exotherm | 40 sec. | 55 sec. | 144 sec. |
| Exotherm | 150°C | 151°C | 145°C |

Examples 22-25

The effect of impurities on the catalyst system is illustrated in Examples 22 through 25. In Example 22, a 0.007 M solution of WCl$_6$/phenol in DCPD was prepared by mixing under nitrogen 150 ml of DCPD with 10.8 ml of a 0.1 M WCl$_6$/phenol solution in toluene and 0.11 ml of benzonitrile. Then 3.0 ml of this solution was mixed under nitrogen with 3 ml of a DCPD solution containing AlEt$_2$Cl at a level DCPD to alkylaluminum of 150:1 and di-n-butyl ether at a level of ether to alkyl-aluminum of 1.5:1.

In Example 23, a 10 ml sample of the catalyst/monomer solution used in Example 22 was mixed with an impurity, 0.036 mmol of H$_2$O, added as a dispersion in DCPD. One and one-half hours later, 3 ml of this mixture was mixed under nitrogen with 3.01 of the activator/monomer solution described in Example 22. The reaction was repeated this time combining the activator/monomer solution with the catalyst/monomer solution 18 hours after the H$_2$O had been added.

Example 24 was done in the same manner as Example 23 with the exception that 0.036 mmol of tert-butyl hydroperoxide was added to a second 10 ml sample of the catalyst solution rather than H$_2$O. The reactivity of the resultant mixture was checked 1-1/2 and 18 hours after the addition of the impurity. Example 25 was carried out in the same manner with the exception that 0.072 mmol of di-tert-butylperoxide was the impurity added initially to 10 ml sample of the catalyst/monomer solution. In every case a solid, insoluble polymer was formed.

TABLE VII

|  | Example 22 | Example 23 | Example 24 | Example 25 |
|---|---|---|---|---|
| DCPD | 43 mmol | 43 mmol | 43 mmol | 43 mmol |
| WCl$_6$/phenol | 0.021 mmol | 0.021 mmol | 0.021 mmol | 0.021 mmol |
| H$_2$O | - | 0.01 mmol | - | - |
| tert-butyl-hydroperoxide | - | - | 0.01 mmol | - |
| Di-tert-butyl-peroxide | - | - | - | 0.02 mmol |
| Et$_2$AlCl | 0.14 mmol | 0.14 mmol | 0.14 mmol | 0.14 mmol |
| Added impurity/W | 0 | 0.5/1 | 0.5/1 | 1/1 |
| Induction time after 1-1/2 hrs. | 31 sec. | 50 sec. | 98 sec. | 33 sec. |
| Exotherm after 1-1/2 hrs. | 173°C | 171°C | 168°C | 171°C |
| Induction time after 24 hrs. | 36 sec. | 98 sec. | 266 sec. | 73 sec. |
| Exotherm after 24 hrs. | 170°C | 170°C | 155°C | 169°C |

Examples 26-33

Samples of polymerized DCPD were made by RIM processing using a standard RIM machine supplied by Accuratio Co. of Jeffersonville, Indiana. The following description illustrates the standard procedure for molding samples. First the desired amount of DCPD was charged into two 2 gallon (7.57 l) tanks. The tanks are located on different sides of the RIM machine: the tank on the A side is the one to which the activator was later added and the tank on the B side is the one to which the catalyst was later added. If desired, rubber and/or organic resins were added as a predissolved solution in DCPD. Also solid fillers, if desired, were added.

The tanks were then closed off and inserted with nitrogen. Sufficient $Et_2AlCl$ was transferred into the A tank to bring the alkylaluminum concentration to 0.048 M and sufficient di-n-butyl ether was added to achieve an ether to alkylaluminum ratio of 1.5:1. Next, sufficient $WCl_6$/phenol to bring the concentration of the catalyst in the B side to 0.007 M was added to the B tank. The catalyst was added as a 0.1 M solution in toluene. All transfers were done in a way to preclude the entrance of oxygen or moisture into the system. The materials were then thoroughly blended in their respective tanks.

The mixing of the A stream and the B stream was accomplished using a standard impingement type RIM mixhead. The ratio of the activator/monomer solution mixed with catalyst/monomer solution was 1:1. The impingement mixing was accomplished by passing both the solutions through orifices 0,813 mm (0.032") in diameter at a flow rate approximately 80 ml/sec. This required pumping pressure of approximately $6,9 \times 10^3$ KPa (1000 psi).

The resulting mixture flowed directly into a mold heated between 50°C and 60°C. The mold was made out of aluminum and was chrome plated. The mold had a flat cavity which formed a plaque sample 254 mm$\times$254 mm$\times$3.2 mm (10"$\times$10"$\times$1/8") thick. A clamping force of 2041,2 Kg (1.5 tons) was used to keep the mold closed. The finished samples were removed at various times after mold filling ended.

In Example 26, the outlined molding procedure was followed where there was added 10 wt% added styrene-butadiene-styrene rubber (Kraton No. 1102 (registered trade mark) manufactured by Shell Chemical Co.). The sample was removed from the mold after 2 minutes. In Example 27 a material of the same composition as Example 26 was produced. This time the mold was opened 30 seconds after the combined streams were injected. The surface features of Example 27 were noticably better than those of Example 26. In Example 28, 10 wt% of a thermally polymerized dicyclopentadiene resin was added in addition to both the catalyst/monomer and the activator/monomer solutions in addition to the styrene-butadiene-styrene rubber.

Various inorganic fillers were incorporated into the DCPD polymer by adding equal amounts to both the catalyst/monomer and the activator/monomer solutions. In Examples 29, samples were made containing 33 wt% 3,2 mm (1/8") milled glass (P117B grade of Owens Corning Co.). These samples were made by initially slurrying the glass into both solutions the catalyst/monomer and the activator/monomer otherwise, these solutions were identical to those used in Example 28. In Example 30 a composition consisting of 10 wt% wollastonite was made by adding the filler to a formulation identical to that described in Example 28. In Example 31 the same procedure was followed as in Example 30 except that a 33 wt% level of wollastonite was employed. In Example 32, 25 wt% wollastonite was added to formulation described in Example 27. In each case a solid, insoluble polymer is formed. Representative properties of Examples 26-32 are listed in Table VII.

## TABLE VIII

| | Example 26 | Example 27 | Example 28 | Example 29 |
|---|---|---|---|---|
| **Resin composition** | | | | |
| % cyclopentadiene resin | — | — | 10 | 10 |
| % Kraton 1102 (registered trade mark) | 10 | 10 | 10 | 10 |
| % DCPD | 90 | 90 | 80 | 80 |
| **Filler composition** | | | | |
| wt% 1/8″ milled glass | — | — | — | 33 |
| wt% wollastonite | — | — | — | — |
| **Tensile properties** | | | | |
| Strength (psi)(KPa) | — | 4,860 (33509,7) | 5,230 (36060,8) | — |
| Modulus (psi)(KPa) | — | 262,000 (1806490) | 257,000 (1772015) | — |
| Elongation at yield (%) | — | 4.0 | 4.0 | — |
| **Flexural properties** | | | | |
| Strength (psi)(KPa) | 7,400 (51 023) | 8,600 (59 297) | — | 8,200 (56539) |
| Modulus (psi)(KPa) | 235,000 (1620325) | 250,000 (1723750) | — | 526,000[2] (3626779) |
| **Impact properties** | | | | |
| Notched izod (ft #/in. notch)(J/mm) | 13.2 (0,66) | 10.5 (0,525) | 11.0 (0,55) | 2.7 |
| Plate impact at 5000″/min. (ft.# | | | | |
| 23°C | 21.0 | — | — | — |
| 0°C | 15.7 | — | — | — |
| −20°C | 12.3 | — | — | — |
| **Heat deflection temperature** | | | | |
| at 264 psi (°C) (1820 KPa) | — | 65° | 64° | 81° |
| **Coefficient of thermal** | | | | |
| expansion (in/in°F)[2](cm/cm°C) | — | 6.0×10⁻⁵ (10.8) | — | 3.2×10⁻⁵ (5.76) |
| Linear mold shrinkage[2] (%) | 2.6 | 3.5 | 3.1 | 1.0 |

[1] Value in the direction parallel to the direction of flow.
[2] Value is the average of the values obtained perpendicular to the direction of flow and parallel to the direction of flow.

Example 33 is a RIM processed poly(DCPD) made without any rubber additives.

TABLE VIII (cont.).

| | Example 30 | Example 31 | Example 32 | Example 33 |
|---|---|---|---|---|
| Resin composition | | | | |
| % cyclopentadiene resin | 10 | 10 | — | — |
| % Kraton 1102 (registered trade mark) | 10 | 10 | 10 | — |
| % DCPD | 80 | 80 | 90 | 100 |
| Filler composition | | | | |
| wt.% 1/8″ milled glass (3.2 mm) | — | — | — | — |
| wt.% wollastonite | 10 | 33 | 25 | — |
| Tensile properties | | | | |
| Strength (psi)(KPa) | 4,700 (32406,5) | — | 4,290 (29579,5) | 5,050 (34819) |
| Modulus (psi)(KPa) | 426,000[1] (2937270) | — | 683,000[1] (4709285) | 270,000 (1861650) |
| Elongation at yield (%) | 3.0 | — | 2.0 | 3.4 |
| Flexural properties | | | | |
| Strength (psi)(KPa) | 9,000 (62055) | 8,400 (57918) | 8,300 (57228,5) | 8,400 (57315) |
| Modulus (psi)(KPa) | 390,000[2] (2689050) | 670,000[2] (4619650) | 480,000[2] (3309600) | 270,000 (1861656) |
| Impact properties | | | | |
| Notched Izod (ft. #/in notch)(J/mm) | 2.0 (0,11) | 2.9 (0,16) | — | 2.3 (0,13) |
| Plate impact at (5000″/min (ft.#) 127 m/min | | | | |
| 23°C (J) | (11.2) 15.2 | — | (11.3) 15.3 | — |
| 0°C (J) | (12.0) 16.3 | — | (11.8) 16.0 | — |
| −20°C (J) | (11.9) 16.1 | — | (12.7) 17.2 | — |
| Heat deflection temperature at 264 psi (°C) (1820 KPa) | 69° | — | 79° | 60° |
| Coefficient of thermal expansion (in/in°F)[2] (cm/cm°C) | $5.2 \times 10^{-5}$ (9,36) | — | $3.8 \times 10^{-5}$ (6,84) | — |
| Linear mold shrinkage[2] (%) 1.5 | 1.6 | — | 1.0 | — |

[1]Value in the direction parallel to the direction of flow.
[2]Value is the average of the values obtained perpendicular to the direction of flow and parallel to the direction of flow.

Example 34

A catalyst component was prepared in the following manner:

In an argon filled glove box, 3.96 g of $WCl_6$ was weighed into a 284 ml (10 oz.) pop bottle ("pop" bottle is a bottle for a soft drink e.g. Coca Cola). The bottle was then capped. In another 284 ml (10 oz.) "pop"

12

bottle, 2.21 g (10 mmol) of nonylphenol was added. This bottle was then capped and sparged with nitrogen for 20 minutes. The nonylphenol was then dissolved in 100 ml of toluene, and the resulting solution was transferred by cannula to the pop bottle containing $WCl_6$. After marking the solvent level, the bottle was stirred and sprayed with nitrogen for one hour. Acetylacetone, 2.0 gram (20 mmol) was then added by syringe and the mixture was sparged rapidly and stirred overnight. Toluene was then added to restore the solvent level and the resulting solution was divided among ten 98 mm (4") polyethylene tubes that had been capped and sparged. These were stored under nitrogen.

An activated component was prepared in the following manner:

A 98 mm (4") polyethylene tube was capped and sparged. 8 ml of toluene was syringed into the tube. 2.0 ml of a 1.8 M solution of diethyl aluminum chloride in toluene was added by a syringe. 0.49 grams of butyl ether was then added by syringe.

The polymerization was accomplished in the following manner:

A $15 \times 125$ mm test tube was capped with a rubber stopper and sparged with $N_2$. The tube was then charged with 5 ml of DCPD. 0.19 ml of the catalyst component and 0.038 grams of butyl ether were added by syringe. Then, 0.15 ml of the activator component was added by syringe and the sample was shaken several times to mix the components. The mixture was allowed to stand and polymerize.

The percent gel swell was determined by the following method:

A 5 gram sample of the polymer was broken out of its test tube and sliced into approximately $1 \text{ cm} \times 1.3$ cm diameter cylinders. Each slice was then weighed and placed on a stainless steel wire. The wire and sample were hung in about 50 ml of toluene in a 1 liter round bottom flask and allowed to reflux overnight. After cooling, the samples were removed from the flask, patted dry, and weighed. Gel swell was determined according to the following equation:

$$\frac{\text{Final polymer weight} - \text{initial polymer weight}}{\text{initial polymer weight}}$$

It was found that the sample had a percent swell of 110%.

## Claims

1. A method of making a thermoset homopolymer comprising: first, combining a plurality of reactant streams, one of which contains the activator of a metathesis-catalyst system combined with a moderator which is an ester, ether, ketone or nitrile, and a second which contains the catalyst of said metathesis-catalyst system, and at least one of which contains dicyclopentadiene to form a reaction mixture and then, immediately injecting the reaction mixture into a mold where polymerisation occurs.

2. The method in accordance with Claim 1 further characterized in that the catalyst is a tungsten containing compound.

3. A method in accordance with Claim 2 further characterized in that the tungsten containing compound is selected from the group consisting of tungsten hexachloride and tungsten oxy tetrachloride.

4. The method of Claim 3 further characterized in that the tungsten containing compound is tungsten hexachloride.

5. A method in accordance with Claim 1 characterized in that the catalyst is mixed with dicyclopentadiene before the catalyst is mixed with the activator.

6. A method in accordance with Claim 1 characterized in that the activator is an akylaluminum halide, where the alkyl group contains one to ten carbon atoms.

7. A method in accordance with Claim 6 further characterized in that the activator is selected from the group consisting of diethyl aluminum chloride and ethyl aluminum dichloride.

8. A method in accordance with Claim 7 further characterized in that the activator is diethyl aluminum chloride.

EP 0 084 888 B2

9. A method in accordance with Claim 1 further characterized in that the moderator is selected from the group consisting of isopropyl ether, di-n-butyl ether, ethyl benzoate, phenyl ethyl acetate and diisopropyl ketone.

10. A method in accordance with Claim 9 further characterized in that the moderator is selected from the group consisting of ethyl benzoate and di-n-butyl ether.

11. A method in accordance with Claim 1 further characterized in that the activator to moderator ratio is from about 1:1.5 to about 1:5.

12. The method of Claim 1 characterized in that the activator is mixed with dicyclopentadiene before the activator is mixed with the catalyst.

13. A method in accordance with Claim 1 characterized in that the reaction mixture has a dicyclopentadiene to catalyst molar ratio of shout 1,000:1 to shout 15,000:1.

14. A method in accordance with Claim 1 further characterized in that the reaction mixture has a dicyclopentadiene to catalyst molar ratio of shout 2,000:1.

15. A method in accordance with Claim 1 characterized in that the reaction mixture has a dicyclopentadiene to activator molar ratio of shout 100:1 to about 2,000:1.

16. A method in accordance with Claim 1 further characterized in that the reaction mixture has a to activator molar ratio from shout 200:1 to shout 500:1.

17. A method for making a thermoset homopolymer in accordance with Claim 1 further characterized in that an elastomer is added to at least one of the reactant streams in an amount sufficient to make the viscosity of the reaction mixture between about 300 (300 mPas) and shout 1000 cps (1000 mPas).

18. A method according to Claim 1, wherein a catalyst part of a metathesis-catalyst system is used comprising a catalyst and further a Lewis base where the molar ratio of catalyst to Lewis base is about 1:5.

19. A method according to Claim 18 wherein the Lewis base is selected from the group comprising benzonitrile and tetrahydrofuran.

20. A method according to Claim 1, wherein a catalyst pad of a metathesis-catalyst system is used comprising a catalyst and further a chelant where the molar ratio of catalyst to chelant is about 1:5.

21. A method according to Claim 20 wherein the chelant is selected from the group comprising acetylacatones and alkyl acetoacetates.

22. A thermoset homopolymer comprising polymerized units of dicyclopentadiene having a flexural modulus of at least $1,035 \times 10^4$ KPa (150,000 psi) at ambient temperature, a notched Izod impact strength according to ASTM D-256 of at least about 0,08 J/mm (1.5 ft. lb/in) notch, and a percent gel swell after immersion in toluene for two hours at 100°C of less than 200%.

23. The thermoset homopolymer of Claim 22 characterized in that it has a flexural modulus of at least $1,38 \times 10^6$ KPa (200,000 psi).

24. The thermoset hompolymer of Claim 22 further characterized in that it contains a reinforcing agent present in an amount from 5 to 75 wt% based on the total composition.

25. The thermoset homopolymer of Claim 24 further characterized in that the reinforcing agent is selected from the group consisting of glass, wollastonite, mica, carbon black, talc, and calcium carbonate.

26. The thermoset homopolymer of Claim 22 characterised in that it contains an elastomer present in an amount from about 5 to shout 10 wt% based on dicyclopentadiene polymer.

14

**27.** The thermoset homopolymer of Claim 22 characterized in that the elastomer is selected from the group consisting of natural rubber, butyl rubber, polyisoprane, polybutadiene, polyisobutylene, ethylenepropylene copolymer, styrene-butadiene-styrene triblock rubber, styrene-isoprene-styrene triblock rubber and ethylen-proplyene diene terpolymers.

**Patentansprüche**

**1.** Verfahren zur Herstellung eines wärmegehärteten Homopolymers umfassend: erstens die Kombination einer Vielzahl von Reaktantenströmen, wovon einer den Aktivator eines Metathese-Katalysator-Systems kombiniert mit einem Moderator, der ein Ester, Ether, Keton oder Nitril ist, enthält, und ein zweiter den Katalysator des Metathese-Katalysator-Systems enthält, und wovon mindestens einer Dicyclopentadien enthält, um ein Reaktionsgemisch zu bilden, und dann das sofortige Einspritzen des Reaktionsgemisches in eine Form, wo die Polymerisation stattfindet.

**2.** Verfahren gemäß Anspruch 1, weiterhin dadurch gekennzeichnet, daß der Katalysator eine Wolfram enthaltende Verbindung ist.

**3.** Verfahren gemäß Anspruch 2, weiterhin dadurch gekennzeichnet, daß die Wolfram enthaltende Verbindung ausgewählt ist aus der Gruppe bestehend aus Wolframhexachlorid und Wolframoxytetrachlorid.

**4.** Verfahren gemäß Anspruch 3, weiterhin dadurch gekennzeichnet, daß die Wolfram enthaltende Verbindung Wolframhexachlorid ist.

**5.** Verfahren gemäß Anspruch 1, dadurch gekennzeichnet, daß der Katalysator mit Dicyclopentadien vermischt wird, bevor der Katalysator mit dem Aktivator vermischt wird.

**6.** Verfahren gemäß Anspruch 1, dadurch gekennzeichnet, daß der Aktivator ein Alkylaluminiumhalogenid ist, worin die Alkylgruppe ein bis zehn Kohlenstoffatome enthält.

**7.** Verfahren gemäß Anspruch 6, weiterhin dadurch gekennzeichnet, daß der Aktivator ausgewählt ist aus der Gruppe bestehend aus Diethylaluminiumchlorid und Ethylaluminiumdichlorid.

**8.** Verfahren gemäß Anspruch 7, weiterhin dadurch gekennzeichnet, daß der Aktivator Diethylaluminiumchlorid ist.

**9.** Verfahren gemäß Anspruch 1, weiterhin dadurch gekennzeichnet, daß der Moderator ausgewählt ist aus der Gruppe bestehend aus Isopropylether, Di-n-butylether, Ethylbenzoat, Phenylethylacetat und Diisopropylketon.

**10.** Verfahren gemäß Anspruch 9, weiterhin dadurch gekennzeichnet, daß der Moderator ausgewählt ist aus der Gruppe bestehend aus Ethylbenzoat und Di-n-butylether.

**11.** Verfahren gemäß Anspruch 1, weiterhin dadurch gekennzeichnet, daß das Aktivator-zu-Moderator-Verhältnis etwa 1:1,5 bis etwa 1:5 beträgt.

**12.** Verfahren gemäß Anspruch 1, dadurch gekennzeichnet, daß der Aktivator mit Dicyclopentadien vermischt wird, bevor der Aktivator mit dem Katalysator vermischt wird.

**13.** Verfahren gemäß Anspruch 1, dadurch gekennzeichnet, daß das Reaktionsgemisch ein Dicyclopentadien-zu-Katalysator-Molverhältnis von etwa 1.000:1 bis etwa 15.000:1 hat.

**14.** Verfahren gemäß Anspruch 1, weiterhin dadurch gekennzeichnet, daß das Reaktionsgemisch ein Dicyclopentadien-zu-Katalysator-Molverhältnis von etwa 2.000:1 hat.

**15.** Verfahren gemäß Anspruch 1, dadurch gekennzeichnet daß das Reaktionsgemisch ein Dicyclopentadien-zu-Aktivator-Molverhältnis von etwa 100:1 bis etwa 2.000:1 hat.

15

**16.** Verfahren gemäß Anspruch 1, weiterhin dadurch gekennzeichnet, daß das Reaktionsgemisch ein Dicyclopentadien-zu-Aktivator-Molverhältnis von etwa 200:1 bis etwa 500:1 hat.

**17.** Verfahren zur Herstellung eines wärmegehärteten Homopolymers gemäß Anspruch 1, weiterhin dadurch gekennzeichnet, daß ein Elastomer zu mindestens einem der Reaktantenströme in einer Menge zugegeben wird, die ausreicht, um die Viskosität des Reaktionsgemisches zwischen etwa 300 (300 mPas) und etwa 1000 cps (1000 mPas) einzustellen.

**18.** Verfahren gemäß Anspruch 1, worin ein Katalysatorteil eines Metathese-Katalysator-Systems verwendet wird, umfassend einen Katalysator und weiterhin eine Lewis-Base, wobei das Molverhältnis von Katalysator zu Lewis-Base etwa 1:5 beträgt.

**19.** Verfahren gemäß Anspruch 18, worin die Lewis-Base ausgewählt ist aus der Gruppe umfassend Benzonitril und Tetrahydrofuran.

**20.** Verfahren gemäß Anspruch 1, worin ein Katalysatorteil eines Metathese-Katalysator-Systems verwendet wird, umfassend einen Katalysator und weiterhin einen Chelatbildner, wobei das Molverhältnis von Katalysator zu Chelatbildner etwa 1:5 beträgt.

**21.** Verfahren gemäß Anspruch 20, worin der Chelatbildner ausgewählt ist aus der Gruppe umfassend Acetylacetone und Alkylacetoacetate.

**22.** Wärmegehärtetes Homopolymer, umfassend polymerisierte Einheiten von Dicyclopentadien mit einem Biegemodul von mindestens $1,035 \times 10^6$ kPa (150.000 psi) bei Raumtemperatur, einer Kerbschlagzähigkeit nach Izod gemäß ASTM D-256 von mindestens etwa 0,08 J/mm (1,5 ft. lb/in) Einkerbung und einer prozentualen Gelquellung nach zweistündigem Eintauchen in Toluol bei 100°C von weniger als 200%.

**23.** Wärmegehärtetes Homopolymer gemäß Anspruch 22, dadurch gekennzeichnet, daß es einen Biegemodul von mindestens $1,38 \times 10^6$ kPa (200.000 psi) hat.

**24.** Wärmegehärtetes Homopolymer gemäß Anspruch 22, weiterhin dadurch gekennzeichnet, daß es einen Verstärkungsstoff enthält, der in einer Menge von 5 bis 75 Gew.-% basierend auf der Gesamtzusammensetzung vorliegt.

**25.** Wärmegehärtetes Homopolymer gemäß Anspruch 24, weiterhin dadurch gekennzeichnet, daß der Verstärkungsstoff ausgewählt ist aus der Gruppe bestehend aus Glas, Wollastonit, Glimmer, Ruß, Talk und Calciumcarbonat.

**26.** Wärmegehärtetes Homopolymer gemäß Anspruch 22, dadurch gekennzeichnet, daß es ein Elastomer enthält, das in einer Menge von etwa 5 bis etwa 10 Gew.-% basierend auf dem Dicyclopentadienpolymer vorliegt.

**27.** Wärmegehärtetes Homopolymer gemäß Anspruch 22, dadurch gekennzeichnet, daß das Elastomer ausgewählt ist aus der Gruppe bestehend aus Naturgummi, Butylgummi, Polyisopren, Polybutadien, Polyisobutylen, Ethylenpropylencopolymer, Styrolbutadienstyrol-Triblock-Gummi, Styrolisoprenstyrol-Triblock-Gummi und Ethylenpropylendienterpolymeren.

## Revendications

**1.** Procédé de préparation d'un homopolymère thermodurci qui consiste : d'abord, à combiner une pluralité de jeta de réactants, dont l'un contient l'activateur d'une composition de transfert et de catalyseur combiné à un modérateur qui est un ester, un éther, une cétone ou un nitrile, et le second contient le catalyseur de la composition de transfert et de catalyseur, et dont au moins un contient du dicyclopentadiène, pour constituer un mélange réactionnel et ensuite, à injecter immédiatement le mélange réactionnel dans un moule où se produit la polymérisation.

**2.** Procédé selon la revendication 1, caractérisé en ce que le catalyseur est un composé contenant du tungstène.

**3.** Procédé selon la revendication 2, caractérisé en ce que le composé contenant du tungstène est choisi dans le groupe constitué par de l'bexachlorure de tungstène et de l'oxy-tétrachlorure de tungstène.

**4.** Procédé selon la revendication 3, caractérisé en ce que te composé contenant le tungstène est l'hexachlorure de tungstène.

**5.** Procédé selon la revendication 1, caractérisé en ce que le catalyseur est mélangé avec le dicyclopentadiène avant d'être mélangé avec l'activateur.

**6.** Procédé selon la revendication 1, caractérisé en ce que l'activateur est un halogénure d'alkylaluminium, dans lequel le groupe alkyle contient de 1 à 10 atomes de carbone.

**7.** Procédé selon la revendication 6, caractérisé en ce que l'activateur est choisi dans le groupe constitué par du chlorure de diéthyl-aluminium et du dichlorure d'éthyl-aluminium.

**8.** Procédé selon la revendication 7, caractérisé en ce que l'activateur est du chlorure de diéthyl aluminium.

**9.** Procédé selon la revendication 1, caractérisé en ce que le modérateur est choisi dans le groupe constitué par l'éther isopropylique, l'éther di-n-propylique, le benzoate d'éthyle, l'acétate de phényl éthyle et la diisopropyl cétone.

**10.** Procédé selon la revendication 8, caractérisé en ce que le modérateur est choisi dans le groupe constitué par le benzoate d'éthyle et l'éther di-n-butylique.

**11.** Procédé selon la revendication 1, caractérisé en ce que le rapport de l'activateur au modérateur est d'environ 1:1,5 à environ 1:5.

**12.** Procédé selon la revendication 1, caractérisé en ce que l'activateur est mélangé avec le dicyclopentadiène avant d'être mélangé avec le catalyseur.

**13.** Procédé selon la revendication 1, caractérisé en ce que le mélange réactionnel présente un rapport molaire du dicyclopentadiène au catalyseur d'environ 1.000:1 à environ 15.000:1.

**14.** Procédé selon la revendication 1, caractérisé en ce que le mélange réactionnel présente un rapport molaire du dicyclopentadiène au catalyseur d'environ 2.000:1.

**15.** Procédé selon la revendication 1, caractérisé en ce que le mélange réactionnel présente un rapport molaire du dicyclopentadiène à l'activateur d'environ 100:1 à environ 2.000:1.

**16.** Procédé selon la revendication 1, caractérisé en ce que le mélange réactionnel présente un rapport molaire du dicyclopentadiène à l'activateur d'environ 200:1 à environ 500:1.

**17.** Procédé de préparation d'un homopolymère thermodurci selon la revendication 1, caractérisé en ce qu'un élastomère est ajouté à au moins un des jets de réactants, dans une proportion suffisante pour que la viscosité du mélange réactionnel soit comprise entre 300 mPas (300 cps) et environ 1.000 mPas (1.000 cps).

**18.** Procédé selon la revendication 1, caractérisé en ce qu'on utilise une partie de catalyseur d'une composition de transfert et de catalyseur, comprenant un catalyseur et en plus une base de Lewis, dans laquelle le rapport molaire du catalyseur à la base de Lewis est d'environ 1:5.

**19.** Procédé selon la revendication 18, caractérisé en ce que la base de Lewis est choisie dans un groupe comprenant le benzonitrile et le tétrahydrofuranne.

**20.** Procédé selon la revendication 1, caractérisé en ce qu'on utilise une partie de catalyseur d'une composition de transfert et de catalyseur comprenant un catalyseur et en plus un agent chélatant, dans laquelle le rapport molaire du catalyseur à l'agent chélatant est d'environ 1:5.

**21.** Procédé selon la revendication 20, caractérisé en ce que l'agent chélatant est choisi dans le groupe comprenant les acétylacétones et les acétoacétates d'alkyle.

**22.** Homopolymère thermodurci comprenant des unités polymérisées de dicyclopentadiène ayant un module en flexion d'au moins $1,35 \times 10^6$ KPa (150.000 psi) à la température ambiante, une résistance au choc Izod avec entaille selon la norme ASTM D-256 d'au moins environ 0,08 J/mm (1,5 ft. 1b./in.) d'entaille , et un pourcentage de gonflement du gel après immersion dans le toluène pendant 2 h à 100°C inférieur à 200%.

**23.** Homopolymère thermodurci selon la revendication 22, caractérisé en ce qu'il présente un module en flexion d'au moins $1,38 \times 10^6$ KPa (200.000 psi).

**24.** Homopolymère thermodurci selon la revendication 22, caractérisé en ce qu'il contient un agent renforçateur qui est présent dans une proportion de 5 à 75% en poids, basée sur la composition totale.

**25.** Homopolymère thermodurci selon la revendication 24, caractérisé en ce que l'agent renforçateur est choisi dans le groupe constitué par le verre, le wollastonite, le mica, le noir de carbone, le talc et le carbonate de calcium.

**26.** Homopolymère thermodurci selon la revendication 22, caractérisé en ce qu'il contient un élastomère qui est présent dans une proportion d'environ 5 à environ 10% en poids, basée sur le polymère de dicyclopentadiène.

**27.** Homopolymère thermodurci selon la revendication 22, caractérisé en ce que l'élastomère est choisi dans le groupe constitué par les caoutchouc naturel, caoutchouc butyle, polyisoprène, polybutadiène, polyisobutylène, copolymère éthylène-propylène, caoutchouc ternaire styrène-butadiène-styrène, caoutchouc ternaire styrène-isoprène-styrène et terpolymères éthylène-propylène-diène.